# EUROPEAN PATENT SPECIFICATION

(11) **EP 0 968 911 B1**
(45) Date of publication and mention of the grant of the patent: **27.08.2003**
(21) Application number: 99111637.7
(22) Date of filing: 16.06.1999
(51) Int. Cl.: B62M 23/02

(54) **Electric motor unit in assembly kit form applicable to a bicycle**
Bauteilsatz für Fahrräder mit elektromotorischem Hilfsantrieb
Kit d'assemblage pour bicyclette à assistance électrique

(30) Priority: 29.06.1998 IT VE980023 U
(43) Date of publication of application: 05.01.2000
(73) Proprietor: Rizzetto, Cipriano, 30174 Mestre (VE) (IT)
(72) Inventor: Rizzetto, Cipriano, 30174 Mestre (VE) (IT)
(74) Representative: Petraz, Gilberto

(56) References cited:
- EP-A- 0 728 663
- EP-A- 0 755 854
- EP-A- 0 776 818
- GB-A- 2 249 529
- US-A- 4 871 042
- US-A- 5 242 028

## Description

### FIELD OF THE INVENTION

This invention concerns an electric motor unit in assembly kit form applicable to a bicycle.

With a view to developing the application of the invention on a means of transport, the bicycle, which will continue to spread and increase sales due to well-known environmental problems, some general information will now be given.

### BACKGROUND OF THE INVENTION

Models of electric bicycle which are present on the market today are of different types, such as:
- model with a motor integrated on the rear wheel and/or front wheel;
- model with a motor applied to the front fork with belt transmission;
- model with rear, roller motor; etc.

Some examples of electric devices applied on bicycles can be seen in the following documents: US-A-4,871,042, GB-A-2.249.529. US-A-5,242,028, EP-A-0.755.854, EP-A-0.728.663, and EP-A-0.776.818.

In particular, EP-A-0.728.663 discloses a manpower-assisting power apparatus wherein an electric motor is associated to a differential gear mechanism and wherein a motor speed pulse generator and a pedal rotational speed pulse generator are provided to generate respective signals which are compared by a signal comparator to maintain a constant ratio between these two speeds. This apparatus is very complex and does not provide for a mechanism wherein the electric tension applied to the motor is proportional to the rotation of the pedals imparted by the user of the bicycle, independently from the speed of rotation of the toothed wheel associated thereto.

### SUMMARY OF THE INVENTION

The technological innovation according to the invention radically revolutionises the electric bicycles which are known to the art.

The new traction unit can be applied on all existing models of bicycle (city-bike, mountain-bike, etc.) for both men and women, irrespective of size; it essentially allows to:
- make pedalling lighter or easier;
- modulate the speed;
- modulate the contribution of the electric motor according to the force required by the rider on uphill journeys or different conditions of load, interacting by means of a potentiometer or sensor (encoder).

The application of the electric motor unit according to the invention has been conceived to ensure maximum respect for safety and balance conditions, distributing the weight in such a way as to lower the center of gravity as much as possible.

This innovation, moreover, will be able to extend the use of the bicycle to people with physical and/or motor limitations.

The kit according to the invention consists in its entirety of four main units, as follows:
A) a sensor associated with the pedals and connected to a central command unit;
B) an electric motor;
C) a reduction unit;
D) a battery pack.

The electric motor receives commands from a central command unit which meters the electric current supplied by the batteries according to how much the rider 'accelerates' according to the intensity of reception of the impulses following the pedal stroke, which is monitored by a sensor connected to the central command unit.

The mechanical motion generated by the motor is transmitted to the central unit by means of a reduction unit. From the central unit, the motion is transmitted to the rear wheel by means of the class transmission chain.

It is simple to apply the kit to the bicycle, and the kit can be easily mounted on any kind of bicycle.

### BRIEF DESCRIPTION OF THE DRAWINGS

These and other characteristics of the invention will become clear from the following description of a preferential form of embodiment, given as a non-restrictive example, with the aid of the attached drawings wherein:
- Fig. 1: shows a bicycle on which an electric motor unit according to the invention is assembled;
- Fig. 2: shows an exploded view of the motor unit, the reduction unit and the central unit of the invention;
- Fig. 3: shows a block diagram of the central command unit of the electric motor unit according to the invention.

### DETAILED DESCRIPTION OF PREFERRED EMBODIMENT

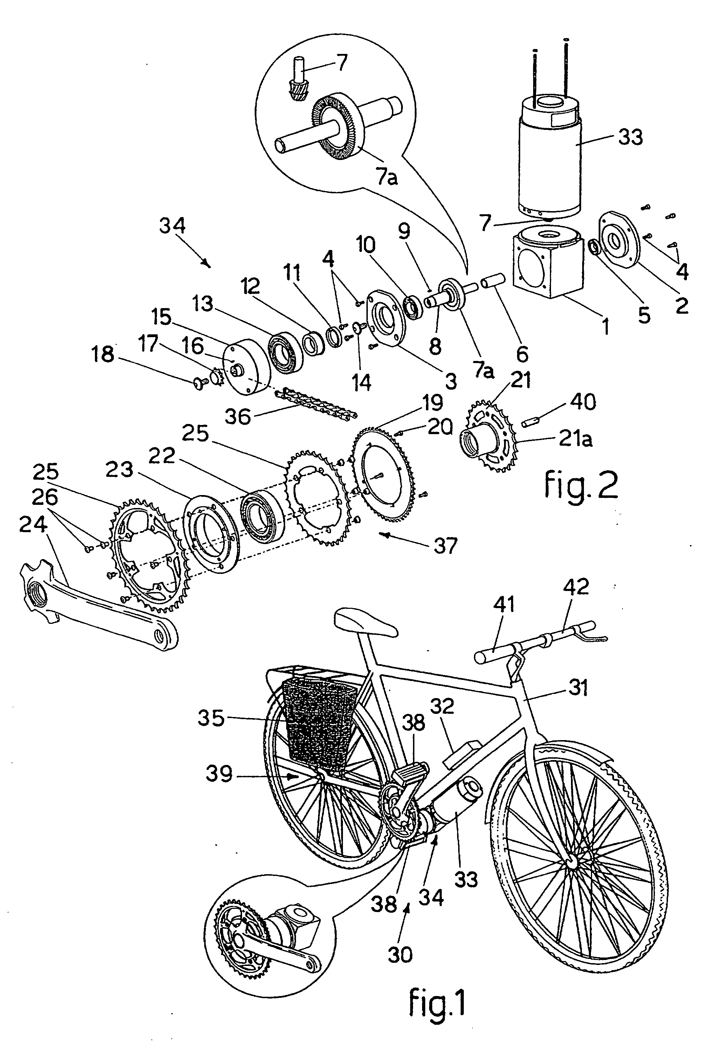

With reference to Fig. 1, an electric motor unit 30 according to the invention is shown applied to a bicycle 31 of a known type.

The motor unit 30 comprises a central command unit 32, an electric motor 33, a reduction unit 34 and a pack of batteries 35.

The reduction unit 34 is connected to the electric motor 33 and is attached to the lower part of the support of the stand of the bicycle 31 by means of an appropriate bracket, following the angle of the oblique tube, to reduce the bulk and to lower the center of gravity of the bicycle 31.

According to one characteristic of the invention, the reduction unit 34 comprises a bevel gear pair, consisting of a first toothed pinion 7 and a corresponding toothed crown 7a (Fig. 2) and suitable to transmit the motion generated by the electric motor 33 to a second toothed pinion 17. The reduction unit 34 also comprises a central body 1 and two lateral covers, respectively right 2 and left 3, held together by attachment screws 4. The central body 1 and the two covers 2 and 3 are made for example of aluminium and contain a transmission system composed of a first bearing 5, a spacer 6, the toothed crown 7a, a transmission shaft 8, a key 9 and a second bearing 10.

Outside the central body 1 of the reduction unit 34, and connected to the central axis of the right part, the following components are arranged in order: an oil-splash guard 11, an attachment ring 12, a free wheel 13, a bolt 14, a pinion support 15, a key 16, the second pinion 17 and a bolt 18.

The motor 33 and the reduction unit 34 are enclosed in two semi-shells made of plastic material held together by appropriate screws which are not shown in the drawings.

The reduction unit 34 is attached to the bicycle 31 in a removable manner and can be detached with the help of normal tools, such a screw-driver, spanner, pincers, etc.

The reduction unit 34 is the result of a specific study so that it can be coupled with the electric motor 33 in order to transmit motion and, consequently, most of its components were designed for the invention and are therefore not available on the market.

The second pinion 17 transmits motion by means of a transmission chain 36 of a known type to a toothed crown 19 of a central unit 37 connected to the pedals 38 of the bicycle 31.

The central unit 37 also comprises a ring 21, which is threaded inside and is provided externally with peripheral teeth 21a suitable to co-operate with a sensor 40.

The central unit 37 also comprises a free wheel 22 attached to a flange 23, two pedal cranks 24, on which the pedals 38 are mounted, and two toothed wheels 25.

According to a simplified variant, there is only one toothed wheel 25.

Attachment screws 20 and 26 connect together and hold coaxial the toothed wheels 25 to the flange 23 and to the toothed crown 19.

The ring 21 is inserted under pressure inside the free wheel 22 and is screwed, by means of its inner thread, to one of the pedal cranks 24, and holds the whole central unit 37 together.

Each toothed wheel 25 is suitable to be connected to a rear sprocket wheel 39 by means of a traditional system with a transmission chain, which is not shown in the drawings.

The main organ of the control unit 37, which enables the transmission of motion from the pedals 38 and/or from the motor 33 to the toothed wheels 25, is the free wheel 22, by which it is possible to use or not use the drive supplied by the electric motor 33, as will be described in more detail hereafter.

The flange 23 connected to the pedal crank 24 is subject to high precision machining inasmuch as it is the seating for the free wheel 22.

The flange 23 and the ring 21 are also not available on the market and therefore have to be made to measure.

The toothed wheels 25, the toothed crown 19 and the free wheel 22 have to undergo adaptation in order to be assembled.

All the components of the control unit 37 are on the same axis of rotation, coinciding with the axis of the seating of the central movement of the bicycle 31.

According to a variant, a knob potentiometer 41 is mounted on the right-hand grip of the handlebars 42 and is connected in a traditional way to the control unit 32 by means of feed cables which are not shown in the drawings.

The battery pack 35 consists of two accumulators of a known type, each of which is suitable to deliver current at a tension of 12V and housed in appropriate bags attached on the rear luggage rack of the bicycle 31. The two accumulators are connected in series, therefore the tension fed to the motor 33 is 24V.

The accumulators are equipped with connection pins to connect with the supply cable, to allow the user to disconnect them and then detach them from the bicycle 31 when he/she wants to use it in the traditional way.

The central command unit 32 is mounted at any position which is suitable for the bicycle 31, for example on the oblique tube of the bicycle 31 or in the bags containing the batteries 35.

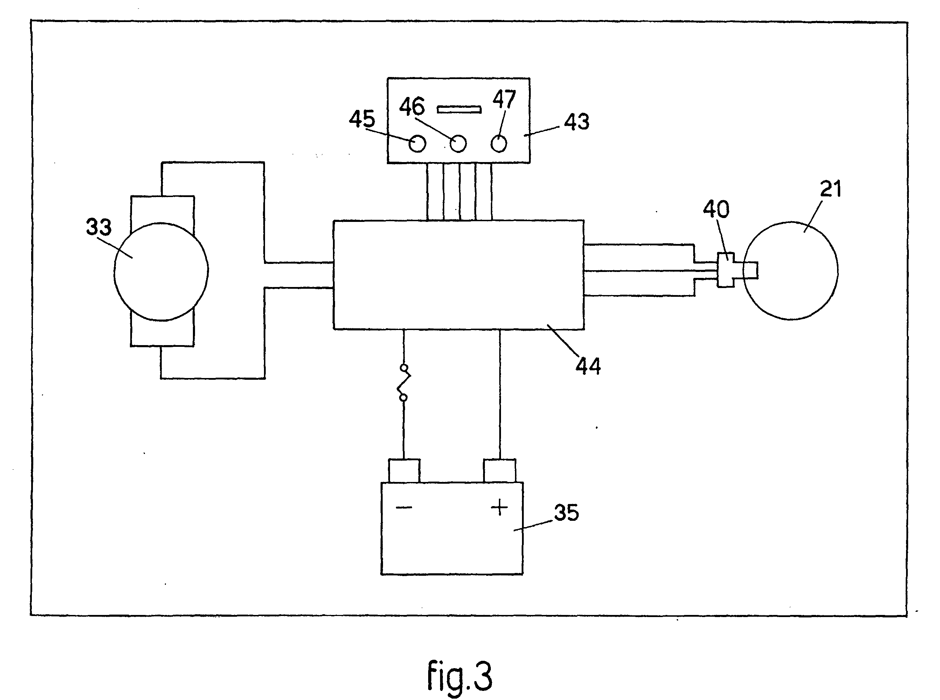

The central command unit 32 (Fig. 3) comprises an actuation box 43 and control unit 44, suitable to command the electric motor 33 according to the speed signal arriving from the sensor 40.

A trimmer of a known type, arranged in the control unit 44 allows to set the speed of rotation of the pedals 38 to which the maximum speed of the electric motor 33 corresponds. The control unit 44 is able to deliver a current of up to 28A to the motor 33, but in order to limit consumption it is suitable to limit the maximum current delivered to the electric motor 33 to a determined value, for example 15A. This is obtained by means of a constant reading of the load of the batteries 35 and it interrupts the feed to the motor 33 in the event of anomalies such as high absorption, insufficient battery tension and thermal protection.

The actuation box 43 is suitable to receive the key enabling to activate the motor unit 30 and also contains a device which signals the operational state of the plant, comprising three leds 45, 46 and 47.

The first led 45, which can be for example green, is suitable to indicate the presence of feed in the control unit 44.

The second led 46 which can be for example yellow, is suitable to indicate a condition of high absorption by the motor, so that if it is off it indicates a normal absorption; if it is flashing it indicates high absorption (>15A); if it is on it indicates an absorption limit and intervenes after about 8 seconds of flashing and de-activates the drive.

The third led 47, which can be for example red, is suitable to indicate the condition of the batteries 35, so that if it is off it indicates that the battery is charged; if it is flashing it indicates that the battery is delivering a tension of less than 19V; if it is on it indicates that the battery is dead and de-activates feed to the motor 33.

The electric motor unit 30 as described heretofore functions as follows:

When the key is inserted into the box 43 the central command unit 32 is fed, and transmits current to the sensor 40, which monitors the speed of rotation imparted by the user, by means of the pedals 38, to the ring 21; the sensor 40 also transmits a corresponding signal, proportionate to the said speed, to the central command unit 32.

Therefore, as the rider pedals, the sensor 40 perceives the passage of the teeth 21a of the ring 21, sends the impulses to the central command unit 32, which supplies a corresponding feed to the electric motor 33, with a tension varying from a minimum of 8V to a maximum of 24V.

Once the bicycle 31 has been started, the pedal stroke becomes extremely light for the rider, in the sense that he/she will not have to make excessive efforts, because he/she is helped by the motor 33.

When he/she stops pedalling, the ring 21 stops and the sensor 40, since it no longer detects any passage of the teeth of the ring 21, no longer sends any signal to the control unit 44, which thus stops the feed to the electric motor 33, which stops.

If the rider does not want to use the electric motor 33, he/she can remove the key from the enabling box 43 and can use the bicycle 31 in the traditional way.

The presence of the free wheel 22 between the pedal cranks 24 and the toothed wheels 25 means that if the pedals 38 are driven forwards, they transmit motion to the toothed wheels 25, while if the pedals 38 are driven backwards, they do not transmit any motion to the toothed wheels 25.

The backwards motion of the pedals 38 and the relative toothed wheels 24 is however transmitted to the ring 21 which is keyed thereto, so that the passage of the teeth 21a is monitored by the sensor 40, both when the ring 21 rotates forwards and also when the ring 21 rotates backwards, together with the pedals 38, for which reason it is possible to command the motor 33, regulating the speed, also when pedalling backwards.

According to a variant, the central command unit 32 can be regulated so as not to take into account the impulses sent by the sensor 40 when the rotation of the ring 21 takes place backwards, that is, in the opposite direction to the normal direction of advance.

## Claims

1. Electric motor unit applicable to a bicycle (31) having at least a toothed wheel (25) connected to the pedals (38), comprising an electric motor (33) suitable to be fed by at least a battery (35), means to transmit motion (34, 37) suitable to connect the electric motor (33) to the toothed wheel (25) and a control unit (44) connected to the electric motor (33) and to the battery (35), said means to transmit motion (34, 37) comprising a ring (21) associated with the pedals (38) to rotate in synchrony therewith, **characterised in that** a free wheel (22) is interposed between said toothed wheel (25) and said ring (21) and has a first part thereof connected to the toothed wheel (25) and a second part thereof connected to the ring (21), and **in that** a sensor (40) is provided to detect the angular rotation of said ring (21) to transmit a corresponding electric signal to said control unit (44) so that said electric motor (33) is fed with a tension proportional to the speed of rotation of said ring (21), imparted by the user of the bicycle (31) by means of the pedals (38), independently from the speed of rotation of said toothed wheel (25).

2. Electric motor unit as in Claim 1, **characterised in that** said first part is the outer part of the free wheel (22) and said second part is the inner part of the free wheel (22).

3. Electric motor unit as in Claim 1 or 2, **characterised in that** the ring (21) is provided with a plurality of teeth (21a) and that the sensor (40) is suitable to detect the passage of said teeth (21a).

4. Electric motor unit as in Claim 1, 2 or 3, **characterised in that** the means to transmit motion comprise a reduction unit (34) and a central unit (37) attached on the lower part of the frame of the bicycle (31), following the angle of the frame, to reduce the space occupied and to lower the center of gravity of the bicycle (31).

5. Electric motor unit as in Claim 4, **characterised in that** the reduction unit (34) comprises a bevel gear pair (7, 7a) suitable to transmit the motion generated by the electric motor (33) to a toothed pinion (17), a central body (1) and two lateral covers (2, 3).

6. Electric motor unit as in Claim 5, **characterised in that** the central body (1) and the covers (2, 3) are made of light alloy and contain a transmission system consisting of a first bearing (5), a spacer (6), a toothed crown (7a), a transmission shaft (8), and a second bearing (10).

7. Electric motor unit as in Claim 5, **characterised in that** between the central body (1) and the toothed pinion (17) there is a second free wheel (13).

8. Electric motor unit as in Claim 4, **characterised in that** the motor (33) and the reduction unit (34) are enclosed in two semi-shells made of plastic material.

9. Electric motor unit as in Claim 4, **characterised in that** the central unit (37) comprises a toothed crown (19) connected to said toothed wheel (25) and, by transmission means (36), to the toothed pinion (17).

10. Electric motor unit as in Claim 4, **characterised in that** the control unit (44) is connected to an actuation box (43) in which an enabling key is suitable to be inserted and which comprises a device with leds to signal on the operational state of the plant.

## Patentansprüche

1. Elektrisches Aggregat, das auf ein mindestens ein mit den Pedalen (38) verbundenes Zahnrad (25) aufweisendes Fahrrad (31) angebracht werden kann und einen zur Speisung durch mindestens eine Batterie (35) geeigneten Elektromotor (33), einige zur Verbindung des Elektromotors (33) mit dem Zahnrad (25) geeignete Bewegungsübertragungsmittel (34, 37) und eine mit dem Elektromotor (33) und der Batterie (35) verbundene Kontrolleinheit (44) umfaßt, wobei diese Bewegungsübertragungsmittel (34, 37) einen mit den Pedalen (38) verbundenen Ring (21) zur gleichzeitigen Drehung mit diesen umfassen, **dadurch gekennzeichnet, daß** ein Freilauf (22) zwischen diesem Zahnrad (25) und diesem Ring (21) angeordnet ist und einen mit dem Zahnrad (25) verbundenen ersten Teil und einen mit dem Ring (21) verbundenen zweiten Teil aufweist, und daß ein Fühler (40) zur Aufnahme der Winkeldrehung dieses Ringes (21) vorgesehen ist, um ein entsprechendes elektrisches Signal dieser Kontrolleinheit (44) zu übertragen, so daß dieser Elektromotor (33) mit einer der Drehgeschwindigkeit dieses Ringes (21) angemessenen Spannung gespeist ist, wobei diese Spannung vom Benutzer des Fahrrades (31) durch die Pedale (38) unabhängig von der Drehgeschwindigkeit dieses Zahnrades (25) erteilt wird.

2. Elektrisches Aggregat nach Anspruch 1, **dadurch gekennzeichnet, daß** dieser erste Teil der Außenteil des Freilaufes (22) und dieser zweite Teil der Innenteil des Freilaufes (22) ist.

3. Elektrisches Aggregat nach Anspruch 1 oder 2, **dadurch gekennzeichnet, daß** der Ring (21) mit mehreren Zähnen (21a) ausgestattet ist und der Fühler (40) geeignet ist, den Durchgang dieser Zähne (21a) aufzunehmen.

4. Elektrisches Aggregat nach Anspruch 1, 2 oder 3, **dadurch gekennzeichnet, daß** die Bewegungsübertragungsmittel ein Untersetzungsgetriebe (34) und eine Zentraleinheit (37) umfaßen, die auf dem Unterteil des Rahmens des Fahrrades (31) gemäß der Abwinklung des Rahmens befestigt sind, um den eingenommenen Raum zu beschränken und den Schwerpunkt des Fahrrades (31) niedriger zu machen.

5. Elektrisches Aggregat nach Anspruch 4, **dadurch gekennzeichnet, daß** das Untersetzungsgetriebe (34) ein Kegelräderpaar (7, 7a) umfaßt, das geeignet ist, die vom Elektromotor (33) erzeugte Bewegung auf ein Zahnritzel (17), einen Zentralkörper (1) und zwei Seitendeckel (2, 3) zu übertragen.

6. Elektrisches Aggregat nach Anspruch 5, **dadurch gekennzeichnet, daß** der Zentralkörper (1) und die Seitendeckel (2, 3) aus einem Leichtmetall bestehen und ein Übertragungssystem enthalten, das aus einem ersten Lager (5), einem Abstandstück (6), einem Zahnkranz (7a), einer Antriebswelle (8) und einem zweiten Lager (10) besteht.

7. Elektrisches Aggregat nach Anspruch 5, **dadurch gekennzeichnet, daß** zwischen dem Zentralkörper (1) und dem Zahnritzel (17) ein zweiter Freilauf (13) vorhanden ist.

8. Elektrisches Aggregat nach Anspruch 4, **dadurch gekennzeichnet, daß** der Motor (33) und das Untersetzungsgetriebe (34) in zwei Halbschalen aus Kunststoff enthalten sind.

9. Elektrisches Aggregat nach Anspruch 4, **dadurch gekennzeichnet, daß** die Zentraleinheit (37) einen Zahnkranz (19) umfaßt, der mit diesem Zahnrad (25) und durch Übertragungsmittel (36) mit dem Zahnritzel (17) verbunden ist.

10. Elektrisches Aggregat nach Anspruch 4, **dadurch gekennzeichnet, daß** die Kontrolleinheit (44) mit einem Antriebsgehäuse (43) verbunden ist, in das ein Berechtigungsschlüssel eingesteckt werden kann und das eine Vorrichtung mit Leuchtdioden umfaßt, um den Betriebszustand der Anlage zu melden.

## Revendications

1. Groupe moteur électrique applicable à une bicyclette (31) ayant au moins une roue dentée (25) reliée aux pédales (38), comprenant un moteur électrique (33) apte à être alimenté par au moins une batterie (35), des moyens de transmission du mouvement (34, 37) aptes à relier le moteur électrique (33) à la roue dentée (25) et un groupe de contrôle (44) relié au moteur électrique (33) et à la batterie (35), lesdits moyens de transmission du mouvement (34, 37) comprenant une bague (21) associée aux pédales (38) pour tourner en synchronie avec celles-ci, **caractérisé en ce qu'**une roue libre (22) est interposée entre ladite roue dentée (25) et ladite bague (21) et a une première partie reliée à la roue dentée (25) et une deuxième partie reliée à la bague (21), et **en ce qu'**un capteur (40) est prévu pour détecter la rotation angulaire de ladite bague (21) pour transmettre un signal électrique correspondant audit groupe de contrôle (44), de façon que ledit moteur électrique (33) est alimenté avec une tension proportionnelle à la vitesse de rotation de ladite bague (21), donnée par l'utilisateur de la bicyclette (31) au moyen des pédales (38) indépendamment de la vitesse de rotation de ladite roue dentée (25).

2. Groupe moteur électrique selon la revendication 1, **caractérisé en ce que** ladite première partie est la partie extérieure de la roue libre (22) et ladite deuxième partie est la partie intérieure de la roue libre (22).

3. Groupe moteur électrique selon la revendication 1 ou 2, **caractérisé en ce que** la bague (21) est pourvue d'une pluralité de dents (21a) et **en ce que** le capteur (40) est apte à détecter le passage desdits dents (21a).

4. Groupe moteur électrique selon la revendication 1, 2 ou 3, **caractérisé en ce que** les moyens de transmission du mouvement comprennent un groupe réducteur (34) et un groupe central (37) fixés sur la partie inférieure du cadre de la bicyclette (31), selon l'angle du cadre, pour réduire la place occupée et baisser le centre de gravité de la bicyclette (31).

5. Groupe moteur électrique selon la revendication 4, **caractérisé en ce que** le groupe réducteur (34) comprend une paire d'engrenages coniques (7, 7a) apte à transmettre le mouvement engendré par le moteur électrique (33) à un pignon denté (17), à un corps central (1) et à deux couvercles latéraux (2, 3).

6. Groupe moteur électrique selon la revendication 5, **caractérisé en ce que** le corps central (1) et les couvercles (2, 3) sont faits en alliage léger et contiennent un système de transmission constitué d'un premier palier (5), une entretoise (6), une couronne dentée (7a), un arbre de transmission (8) et un deuxième palier (10).

7. Groupe moteur électrique selon la revendication 5, **caractérisé en ce que** entre le corps central (1) et le pignon denté (17) il y a une deuxième roue libre (13).

8. Groupe moteur électrique selon la revendication 4, **caractérisé en ce que** le moteur (33) et le groupe réducteur (34) sont renfermés dans deux demi-coquilles faites en matériel plastique.

9. Groupe moteur électrique selon la revendication 4, **caractérisé en ce que** le groupe central (37) comprend une couronne dentée (19) reliée à ladite roue dentée (25) et, par des moyens de transmission (36), au pignon denté (17).

10. Groupe moteur électrique selon la revendication 4, **caractérisé en ce que** le groupe de contrôle (44) est relié à une boîte d'actionnement (43), dans laquelle une clé de dégagement est apte à être insérée et comprenant un dispositif avec des diodes électroluminescentes pour signaler l'état de fonctionnement de l'installation.
